# EUROPEAN PATENT SPECIFICATION

(11) **EP 2 092 412 B1**
(45) Date of publication and mention of the grant of the patent: **20.07.2016**
(21) Application number: 07869071.6
(22) Date of filing: 10.12.2007
(51) Int. Cl.: G06F 3/0482, G06F 3/0481, G06F 3/048, H04L 12/24, H04L 29/08

(54) **USING IMAGES IN ALTERNATIVE NAVIGATION**
VERWENDUNG VON BILDERN IN ALTERNATIVER NAVIGATION
UTILISATION D'IMAGES EN NAVIGATION ALTERNATIVE

(30) Priority: 11.12.2006 US 609031
(43) Date of publication of application: 26.08.2009
(73) Proprietor: Cisco Technology, Inc., San Jose CA 95134-1706 (US)
(72) Inventor: GOLDBERG, Elad, Ramat Hasharon (IL); TROPPER, Amit, Yokneam Illit (IL)
(74) Representative: Kazi, Ilya
(86) International application number: PCT/US2007/086910
(87) International publication number: WO 2008/073861

(56) References cited:
- US-A- 6 144 962
- US-A1- 2005 091 609
- US-A1- 2006 026 509
- US-A1- 2006 242 604

## Description

### BACKGROUND OF THE INVENTION

### 1. Field of the Invention.

This invention relates to management of computer networks. More particularly, this invention relates to a graphical user interface for visualizing and controlling a computer network.

### 2. Description of the Related Art.

**Table 1 - Acronyms and Abbreviations**

| | |
|---|---|
| AAA | Authentication, Authorization, and Accounting |
| CMTS | Cable Modem Termination System |
| GUI | Graphical User Interface |
| LAN | Local Area Network |
| MAP | Map Routing Technique |

A graphical user interface (GUI) is a computer terminal or monitor interface, based on graphics instead of text. A graphical representation appears on a display and a user can interact with the system using a selection device, for example a mouse. The management of a large computer system or network requires management of a large amount of data, which is typically organized hierarchically.

A graphical user interface for visualizing and controlling a hierarchic structure may consist of a first icon or set of icons that represents the structure at the top level. If a user activates the first icon with the selection device, e.g., by clicking on it, a second set of icons appears, representing a lower level of the structure. This may be repeated until the user sees an icon representing the component or function to be managed. The well-known Windows Explorer utility of Microsoft^{®} Windows^{®} is an example of such a graphical user interface

Alternatively, the graphical user interface may consist of menus and submenus representing the different devices and properties at different levels of the hierarchic structure. If a user activates the top-level menu, e.g., by clicking on it, a second level menu appears representing a lower level of the hierarchy. This may be repeated until the user sees a menu item representing the component or function to be managed.

Commonly assigned U.S. Patent No. 6, 628, 304 to Mitchell, et al. discloses presenting hierarchical data to a user via a graphical user interface. In the interface, hierarchical data is represented by nodes, beginning with one or more top nodes and extending into lower hierarchical levels by the display of child nodes, grandchild nodes, etc. The arrangement of nodes on the graphical user interface is such that scaling portrays the various hierarchical levels, and nodes do not spatially interfere with one another. Navigation through the hierarchical data is provided by allowing the user to select any visible node, at which point a zoom-in or zoom-out view to the selected node as a centrally located node on the interface is performed. Child nodes at lower hierarchical levels that were not visible before selection are then made visible up to a predetermined number of levels within the hierarchy. A map is provided on the interface, which allows a user to graphically comprehend the present location of all nodes displayed on the interface in relation to their position within the overall hierarchy. As applied to network management, the interface allows errors in low level devices within a network to be visually propagated up to the upper levels of the hierarchy, for display to a user viewing only the top levels.

US 6144962 discloses a visual web site analysis program providing features for facilitating the analysis and management of web sites and web site content. A mapping component scans a web site and builds a site map which graphically depicts the URLs and links of the site to allow the user to visualize the overall architecture of the Web site. The system includes map navigation and URL filtering features.

US 2005/091609 discloses a graphical user interface having a first area with an array of menu items. When a menu item is hovered over by a pointer, an icon such as a contextually-related animated icon is displayed on a second area and changes its appearance in such a way as to indicate to the user the location of the pointer and/or the consequence of selecting that menu item.

US 2006/026509 discloses a system for representing network information by displaying one or more graphical components representing network entities in a first portion of a graphical user interface. An embedded browser is provided in a second portion of the graphical user interface. In response to selection of one of the graphical components, browser-compatible data is retrieved from a network entity corresponding to the selected graphical component, and the browser-compatible data is rendered in the embedded browser.

US 2006/242604 discloses a method of creating and customizing multiple roots in a navigation pane. By selecting desired pages and adding them to the navigation pane, users may create multiple roots with which to navigate, to enable the user to bypass irrelevant pages while reducing the amount of information presented in the navigation pane.

Aspects of the invention are set out in the independent claims. Certain preferred features are set out in the dependent claims.

### BRIEF DESCRIPTION OF THE DRAWINGS

For a better understanding of the present invention, reference is made to the detailed description of the invention, by way of example, which is to be read in conjunction with the following drawings, wherein like elements are given like reference numerals, and wherein:
Fig. 1 schematically depicts in a simplified form a networked data communication system in which the techniques of the present invention may be implemented;
Fig. 2 is a flow chart illustrating a method of operation of a graphical user interface in accordance with a disclosed embodiment of the invention;
Fig. 3 is a screen display including in its content area a graphical representation of a network being managed, in accordance with a disclosed embodiment of the invention;
Fig. 4 shows another state of the screen display shown in Fig. 3, in accordance with a disclosed embodiment of the invention;
Fig. 5 shows a screen display, which includes a graphical representation of user configuration domains in a computer network, in accordance with a disclosed embodiment of the invention;
Fig. 6 shows a screen display that was produced in accordance with a disclosed embodiment of the invention;
Fig. 7 is a screen display showing a graphical representation of a computer network, in accordance with an alternate embodiment of the invention; and
Fig. 8 is a screen display similar to the screen display shown in Fig. 5, wherein some group icons have been augmented by shortcut icons in accordance with a disclosed embodiment of the invention.

### DETAILED DESCRIPTION OF THE INVENTION

In the following description, numerous specific details are set forth in order to provide a thorough understanding of the present invention. It will be apparent to one skilled in the art, however, that the present invention may be practiced without these specific details. In other instances, well-known circuits, control logic, and the details of computer program instructions for conventional algorithms and processes have not been shown in detail in order not to obscure the present invention unnecessarily.

Software programming code, which embodies aspects of the present invention, is typically maintained in permanent storage, such as a computer readable medium. In a client/server environment, such software programming code may be stored on a client or a server. The software programming code may be embodied on any of a variety of known media for use with a data processing system, such as a diskette, or hard drive, or CD-ROM. The code may be distributed on such media, or may be distributed to users from the memory or storage of one computer system over a network of some type to other computer systems for use by users of such other systems. The techniques and methods for embodying software program code on physical media and distributing software code via networks are well-known and will not be further discussed herein.

### Overview.

In complex hierarchical representations there is little scalability to different levels of detail. When viewing a low level icon or menu, the user cannot see the hierarchic structure as a whole. It can be difficult to find a desired activity or data item. Once more than a few heavily populated folders or network segments are expanded via user selection, the user may become disoriented with respect to what area or location of the file system, network or other hierarchical data representation he is currently viewing. Furthermore, considerable navigation through the hierarchy can be required to reach a desired item or to perform certain activities.

The exemplary embodiments described below relate to a certain type of network scenario, which have been selected for conceptual clarity. However, the principles of the invention may be applied more broadly to many applications in which hierarchical data needs to be navigated. The techniques presented below are GUI navigation techniques that are complementary to conventional menu techniques, e.g., dropdown menus, trees, drawers.

In one field application of the invention, computer networks typically comprise a combination of computer systems interconnected with a number of network communications devices such as modems, hubs, routers, bridges, and switches. Such networks may be interconnected with other networks, such as those from government agencies, or other entities, to form a worldwide system of interconnected networks, such as the Internet. Such a computer network can be broken down logically into various hierarchical levels. For instance, a high speed fiberoptic link controlled by high speed routers might form a first level in a hierarchy. This top-level network may interconnect many smaller regional networks associated with specific buildings, cities, or geographical areas, each of which represents a second level in the network hierarchy. Each regional network may interconnect departmental networks representing a third level in the network hierarchy. Each departmental network may include many individual subnetworks of computers, terminals, printers, file and web servers, and so forth to form a fourth level of the hierarchy. Each computer and data communications device may then be considered on an individual basis as a fifth level in the hierarchy and may include various internal devices or peripherals, which form a sixth hierarchical level.

In order to assist a user faced with navigating a complex hierarchical system such as a computer network, a system-wide perspective is commonly obtained from user guides and help files. In the case of complex processes, programs known as "wizards" may lead administrators through a process and avoid navigation of the system in part or entirely. However, familiarity with such systems often must be achieved by gradually gained experience, which can be long and drawn-out. "Shortcuts", tool-bars and "hot keys" are interface features that can be installed or made available for use with a graphical user interface and which can eliminate some navigation. However, in normal use, they can easily become so numerous as to be unwieldy.

Modern graphical user interfaces typically have one or more navigation panels and content areas. A content area is an area of a displayed page or screen, in which the user enters data, reads information. Navigation panels are realized, for example by menu bars, tool bars, or controls, which when actuated, cause some operation to be executed, or cause the content in the content area to be changed.

In some embodiments of the invention, a graphical representation of a hierarchical network management system is displayed in the content area of a page. This representation may describe the topological arrangement of the network. Alternatively, the representation may be a functional representation of the system, indicating processes, or data flows of the system (such as packet processing). Alternatively, the representation could be oriented toward security features, indicating privileges at various levels of the hierarchy. Many other representations of the network will occur to those skilled in the network management art. Indeed, the graphical representation could describe many systems and data collections unrelated to network management.

In an aspect of the invention, a portion of the graphical representation is mapped to items in a simultaneously displayed menu. This mapping may be used to obtain help about the menu items. Additionally or alternatively, the mapping may serve as a convenient entry to a navigation path through the hierarchy via the menu.

Context-sensitive help relating to elements of the graphical representation may be immediately available, responsively to a selection device. For example, in one embodiment, when a mouse pointer passes across an element of the graphical representation that is mapped to a menu item, a visual indicator, e.g., a tooltip, appears on the display, containing a short description about the item. Meanwhile, the menu item is highlighted on the appropriate menu, thereby facilitating an appropriate selection by the user.

When a selection on the graphical representation is made by the user, e.g., by a mouse click, a corresponding menu item is coordinately opened automatically in the menu bar, showing its submenu (if such exists), or executing a designated operation. Additionally or alternatively, selection of an item in the graphical representation may enable a more detailed help display, e.g., a popup window.

Typically, the initial graphical representation of the system in the content area is a broad overview, mapped to a high level menu in the navigation panel. When an item of the high level menu is selected, either from the graphical representation or directly from the menu bar, e.g., by a "right-click" or single click of a mouse, a submenu is exposed, and the initial graphical representation in the content area is replaced by a more detailed graphical map that represents the items in the submenu. This process may iterate, focusing on progressively narrower, but more detailed graphical representations of submenus, eventually reaching the level of the leaves of the hierarchical tree, at which point the process ends, or reiterates at a higher level. Ancillary help displays in the content area or elsewhere may be presented at various stages during the user interaction.

In most cases, orientation and access to a desired object is gained more quickly by coordinately controlling the graphical representations and menus and submenus, and appropriately introducing help aids than by using conventional menus and help pages. The graphical representation may be tailored as a filter, so as to provide rapid access to a frequently accessed subset of options and entries that may be offered by the object. The user thereby avoids navigating through less frequently accessed items. When configured in this manner, the graphical representation complements the menus and submenus, which may be far more detailed in the case of a complex object.

An embodiment of the invention provides enhancements in an authentication, authorization, and accounting (AAA) server used in the operation of a computer network in which a processing unit is linked to a memory, the network, a terminal, and a selection device. The processing unit executes a computer program causing the terminal to display a hierarchical model of the computer network, in which first and second icons representing network data items are arranged in respective first and second hierarchical levels. A navigation panel is also displayed, which has first and second controls respectively mapped to the first and second icons. When a pointer is moved to one of the first icons, a corresponding first control of the navigation panel is emphasized. Selection of one of the first icons causes them to be replaced by the second icons, and the navigation panel is simultaneously modified to display the second controls. The process may be iterated to view any number of hierarchical levels.

### Embodiment 1.

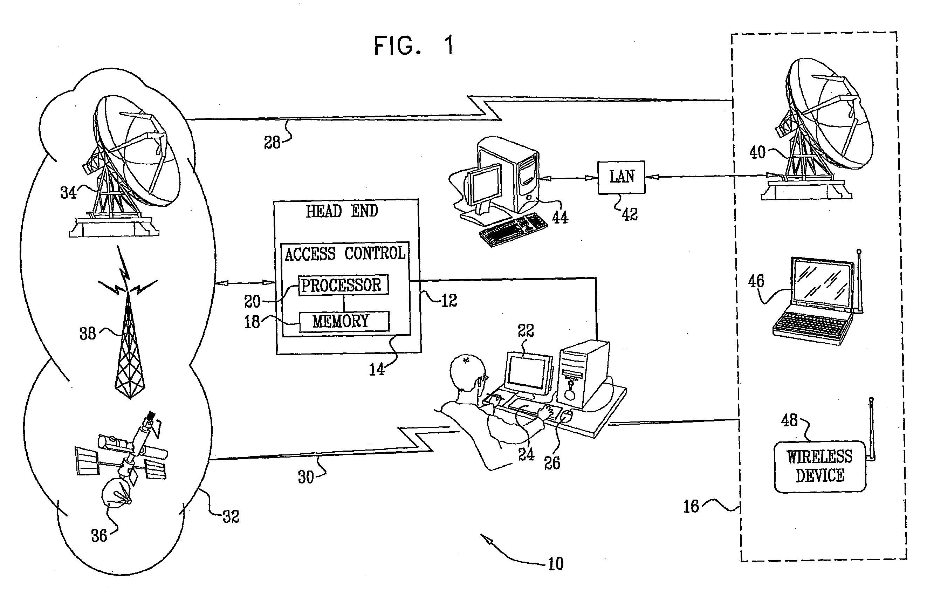

Turning now to the drawings, reference is initially made to Fig. 1, which schematically depicts a simplified version of a networked data communication system 10, in which the techniques of the present invention may be implemented. The system 10 is a useful example for explaining the principles of the invention. However, the principles of the invention can be practiced with many different network systems and data hierarchies. Indeed, the principles of the invention can be applied using a standalone computer. A wireless network is shown in Fig. 1 by way of example and not of limitation. In various embodiments, wireless links may be replaced in whole or in part by other known connections, in which case wireless network elements are replaced by other network elements. For example, in an optical network devices such as add-drop multiplexers, regenerators, digital cross-connects, and section terminating equipment may be substituted for wireless uplink and downlink channels.

The system 10 includes a head end 12 (also known as a central termination unit). The head end 12 includes an AAA server 14, which communicates with a plurality of nodes 16, and coordinates access between each of the nodes 16 and the head end 12. In some embodiments, the head end 12 communicates with network devices in a network environment, gathering information on network elements through the use of a network management protocol that remotely queries the network devices and, in turn, the network devices provide status information. The AAA server 14 may include a memory 18 and at least one processor 20.

Typically, a supervisory operator interacts with the AAA server 14 using a display 22, which may be realized as any suitably linked computer device or workstation having a suitable input device such as a keyboard 24, and a graphical selection device, such as a mouse 26. While a direct connection is shown between the AAA server 14 and the display 22, the AAA server 14 may communicate with other network elements using downlink channels 28 and uplink channels 30.

In Fig. 1 wireless links comprising one or more downlink channels 28 and one or more uplink channels 30 between the head end 12 and the nodes 16 via any one of a plurality of wireless transmitting and receiving devices 32, shown as a satellite base station 34, an orbital satellite 36, and a radio tower 38.

The nodes 16 may include any one of a number of wireless transmitting and receiving devices. For example, a satellite dish 40 may be used to communicate with the head end 12 via the downlink channels 28 and the uplink channels 30. The satellite dish 40 may, in turn, be connected to a local area network 42 (LAN), which, may be further connected to one or more computer systems 44. Another wireless device may be a portable wireless computer system 46, which is able to transmit and receive information to the head end 12 via the downlink channels 28 and the uplink channels 30. Other devices 48 may include, for example, wireless telephones, handheld computing devices, etc.

The downlink channels 28 and the uplink channels 30 may be utilized in a manner similar to that of the upstream and downstream channels of a cable modem network. Thus, with the aid of the network management navigation aids disclosed in detail herein below, Cable modem termination system domain assignment and Map Routing Techniques (MAP) may easily be implemented in the system 10, as taught, for example, by commonly assigned U.S. Patent No. 7,085,287. Moreover, the techniques of the present invention may be easily implemented in any computer network, which uses shared access channels for communicating between a centralized computing system and one or more remote nodes.

### Operation.

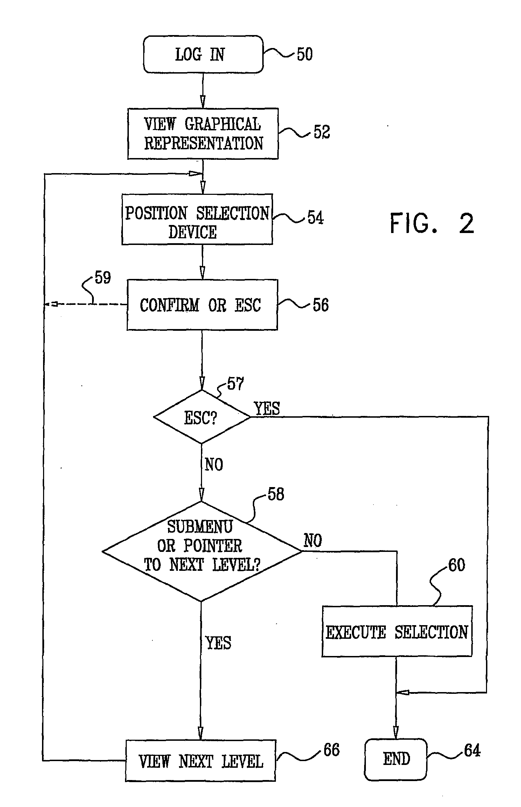

Reference is now made to Fig. 2, which is a flow chart illustrating a method of operation of a graphical user interface in accordance with a disclosed embodiment of the invention. In one embodiment, the operations described below can be performed on pages of a document written in a markup language, e.g., HTML, and presented on the display 22 (Fig. 1) using a conventional browser. The operations can be implemented by incorporating suitable HTML directives and instructions within the document. The method is performed iteratively, and for convenience is explained with reference to screen displays, which usually show a first iteration of respective steps. It will be understood that whenever desired, the user may cancel a currently represented level of the system hierarchy, e.g., by pressing the "Esc" key of a keyboard. While Fig. 2 is explained with respect to a network management application, this is exemplary, and the method can be performed with many other applications employing a GUI.

At initial step 50 a user logs into an access control system management application. The application is suitable for controlling the network using the AAA server 14 (Fig. 1).

Next, at step 52, the user is presented with a graphical representation of the current level of the system hierarchy. In the first iteration, this is a top-level view. A menu bar or navigation panel is also presented.

Next, at step 54, the user points or moves a graphical selection device, e.g., a mouse, over an area of the image. When the mouse pointer (or the indicator of another conventional selection device) is proximate to an icon of the graphical representation, the corresponding mapped element of the menu bar is automatically emphasized, e.g., by highlighting. A tooltip may also appear near the icon.

Next, at step 56, the area indicated at step 54 is confirmed by actuating the selection device, e.g., by clicking a mouse, on an icon of the graphical representation, pressing an appropriate key of a keyboard, or making a selection from the currently emphasized menu. Optionally, the user may choose to disregard the currently indicated area, and simply move the selection device to another area. This possibility is indicated by the broken line 59 leading from step 56. In some embodiments, the selection could be confirmed simply by leaving the mouse in place for a predetermined time period. However, in the event the user determines that the current display level or submenu is inappropriate to his requirements, an escape sequence can be initiated at this time, e.g., by pressing the "Esc" key on the keyboard.

Control now proceeds to decision step 57, where it is determined if an escape sequence was initiated. If the determination at decision step 57 is affirmative, then control proceeds to final step 64 and the process ends.

If the determination at decision step 57 is negative, then control proceeds to decision step 58, where it is determined if the item selected in step 56 is an icon referring to a higher level of detail in the graphical display or equivalently is a corresponding submenu item if the selection in step 56 was made using the currently emphasized menu.

If the determination at decision step 58 is negative, then it is concluded that the selected item was a terminal element in the hierarchy represented by the menu system and the graphical display. No further navigation of the menu system or graphical display occurs, because the selection corresponds to a definitive action to be taken, e.g., a command, program to be executed, or content to be displayed. Control proceeds to step 60 and the selection is executed. In the content area of the screen display, appropriate information representing the selected activity or function may now appear and optionally replaces the graphical representation. The procedure then terminates at final step 64.

If the determination at decision step 58 is affirmative, then control proceeds to step 66. An appropriate element of the menu expands to show a submenu, and a new graphical representation showing a higher level of detail of the previously selected item appears. This higher level of detail corresponds to the submenu.

Control returns to step 54 to begin another iteration. While not shown explicitly in Fig. 2, it will be understood that the user may return to a higher level of the system hierarchy at any time, for example, by use of the browser's "back" control. Additionally or alternatively, return to a higher level may be effected by clicking a higher entry bar of the menu, or by clicking an icon indicating a return to a higher hierarchical level in the graphical representation.

### Example.

This example describes a series of screen displays that were developed by performing the method disclosed above with respect to Fig. 2 on a prototype embodiment. The computer application that was executed is a network access control management application, which is adapted to management of systems such as the system 10 (Fig. 1).

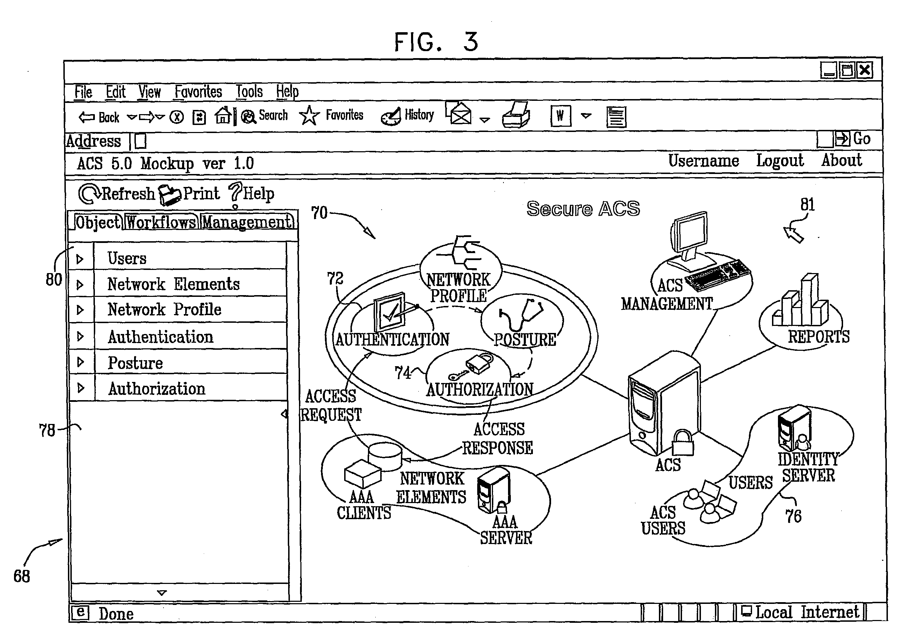

Reference is now made to Fig. 3, which is a screen display 68 including in its content area a typical graphical representation 70 of a network whose access is being managed, in accordance with a disclosed embodiment of the invention. The graphical representation 70 corresponds to step 52

(Fig. 2). In this example a high level view orients the user to different system functions and their interrelations, and indicates possibilities for configuring the system using the access control system management application. Among the functional elements represented in Fig. 3 are an authentication function icon 72, an authorization function icon 74 and a users icon 76. A navigation panel 78 at the left of the screen display 68 has entries corresponding to elements of the graphical representation 70, for example an entry 80 labeled "users", which corresponds to the users icon 76. A mouse pointer 81 is present in an insignificant position within the content area of the screen display 68.

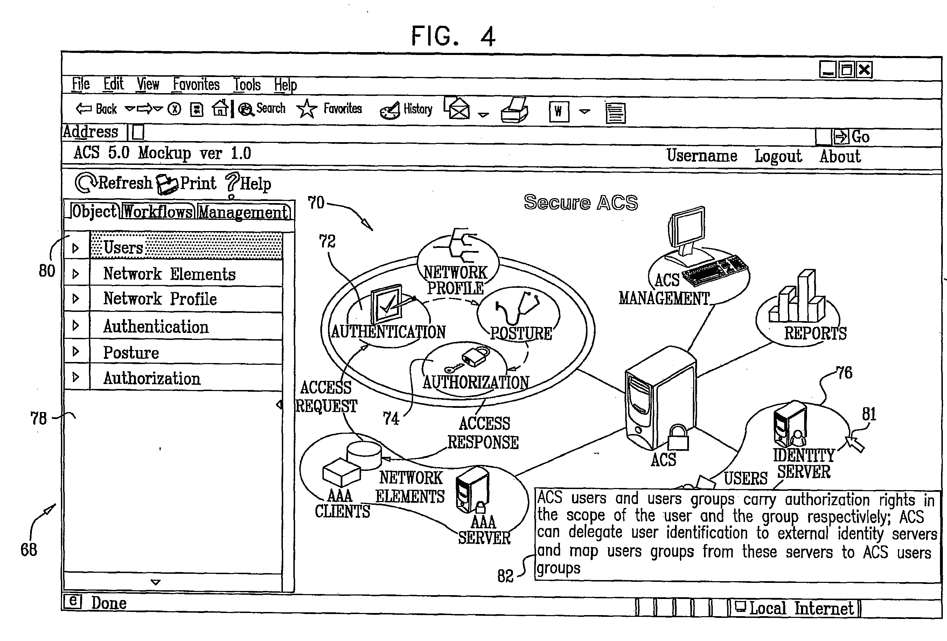

Reference is now made to Fig. 4, which shows another state of the screen display 68 (Fig. 3), in accordance with a disclosed embodiment of the invention. The pointer 81 was positioned generally over the users icon 76, thereby indicating the user function as a potential item of interest. Responsively to the position of the selection device, a context-sensitive help description 82 was superimposed on the graphical representation 70, generally in the area occupied by the users icon 76. Simultaneously, the entry 80 in the navigation panel was highlighted. The entry 80 is the menu drawer responsible for user configuration. The screen display 68, corresponding to step 54 (Fig. 2), is shown in a state in which the user was invited to confirm the tentative selection of the user function with the selection device, e.g., by a mouse click, on the users icon 76. This would result in a more detailed view, as described below. Alternatively, the entry 80 could have been selected with the selection device or with another conventional input device, such as a keyboard or touch screen, as attention was drawn by its emphasis on the screen. The same result is produced in either case.

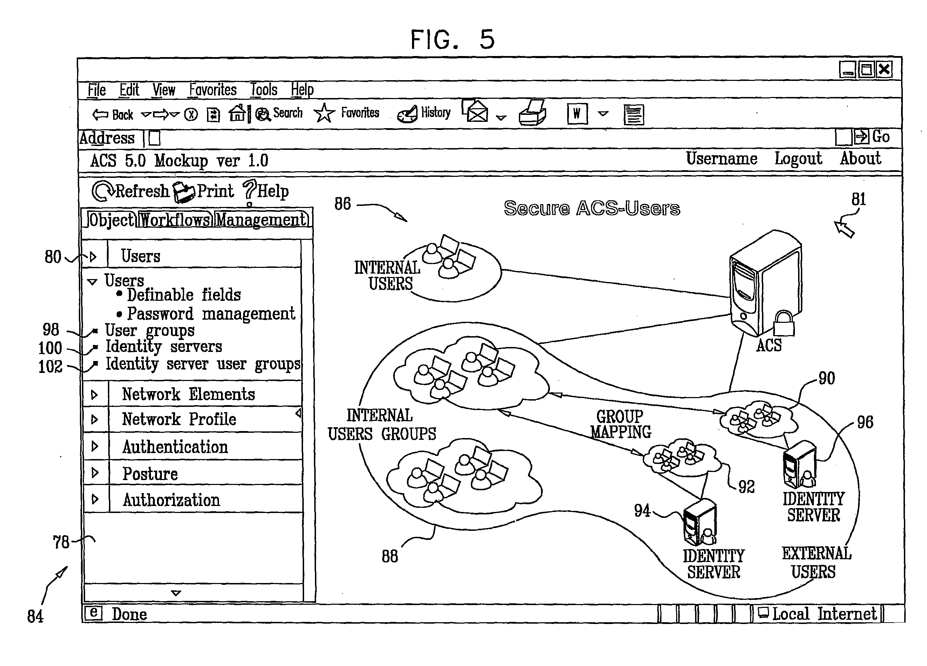

Reference is now made to Fig. 5, which shows a screen display 84, which includes a graphical representation 86 of user configuration domains, and which is a more detailed version of the user functions represented by the users icon 76 (Fig. 4) in accordance with a disclosed embodiment of the invention. This view corresponds to step 66 (Fig. 2). The graphical representation 86 includes an internal users groups icon 88, group mapping icons 90, 92, and identity server icons 94, 96. The entry 80 in the navigation panel 78 is now expanded to show a submenu. An entry 98, labeled "User groups" corresponds to the internal users groups icon 88, an entry 100, labeled "Identity servers" corresponds to the identity server icons 94, 96, and an entry 102, labeled "Identity server user groups mapping" corresponds to the group mapping icons 90, 92. The pointer 81 is again in an insignificant location in the content area of the screen display 84

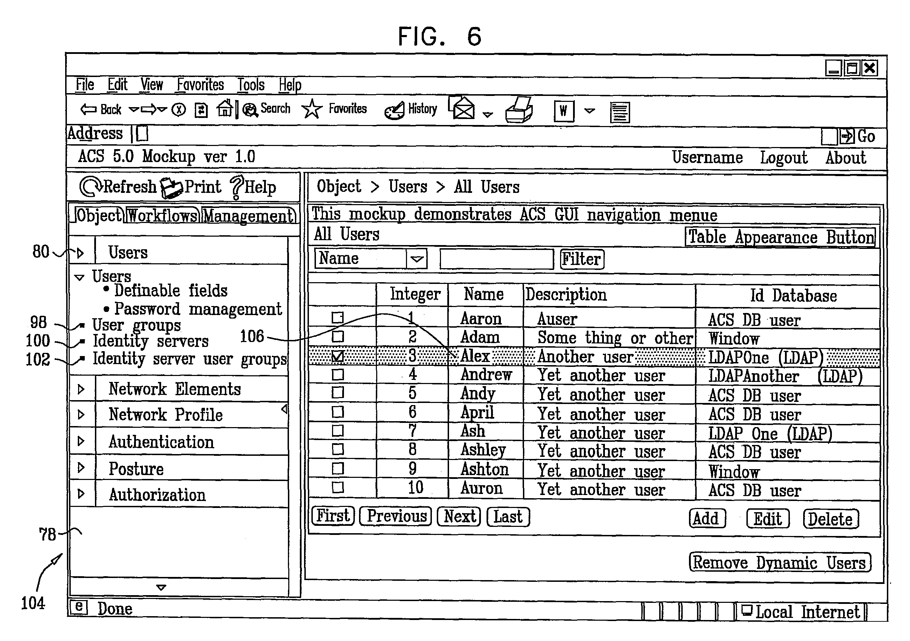

Reference is now made to Fig. 6, which shows another screen display 104 that was produced in accordance with a disclosed embodiment of the invention. This view corresponds to step 60 (Fig. 2). The appearance of the navigation panel 78 remains unchanged when compared to Fig. 5. However, the graphical representation 86 (Fig. 5) is no longer present. Instead, the content area comprises a list of ten users, from which a user 106 (Alex) has been selected. From this point operations respecting the user 106 were conducted conventionally.

### Embodiment 2.

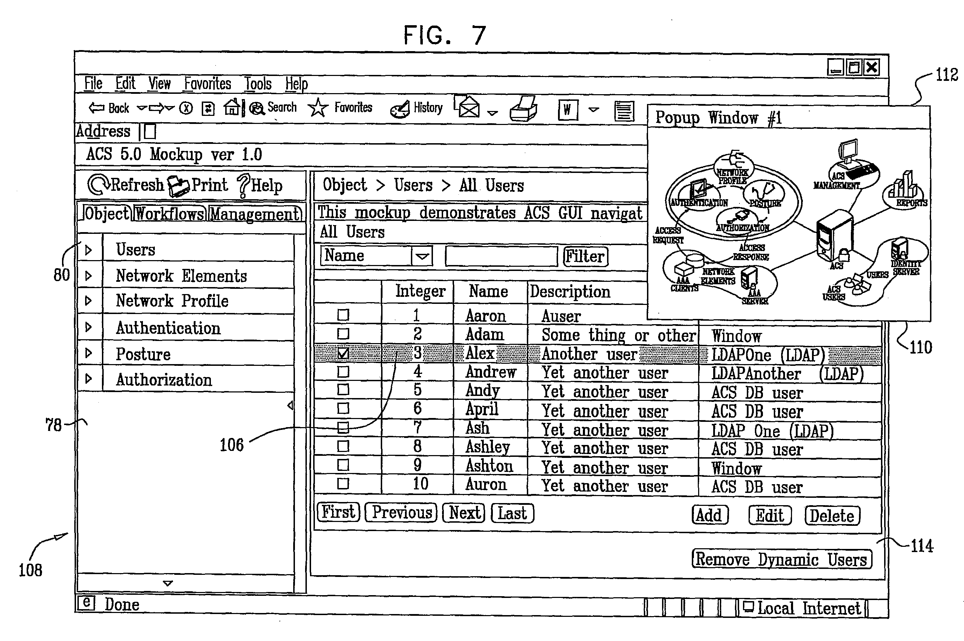

In another embodiment of the invention, the graphical representation does not occupy the content area, although it may be superimposed at least in part. Reference is now made to Fig. 7, which is a screen display 108 showing a graphical representation 110 of a network being managed, in accordance with an alternate embodiment of the invention. The graphical representation 110 displays the same information as the graphical representation 70 (Fig. 3), except that it occupies the content area of a popup window 112. The main display has a content area 114, which contains other content that may be of interest to the user. This embodiment has the advantage of displaying both a representation of a hierarchical system and content simultaneously. Of course, help information (not shown) may be also shown, e.g., as tool tips or additional popup windows. **Embodiment 3**.

Reducing the number of clicks to obtain frequently used operations can be achieved by adding shortcuts to the graphical representation. Such shortcuts are implemented as shortcut icons embedded in the graphical representation, preferably in the region of the graphical representation that relates to the desired operations.

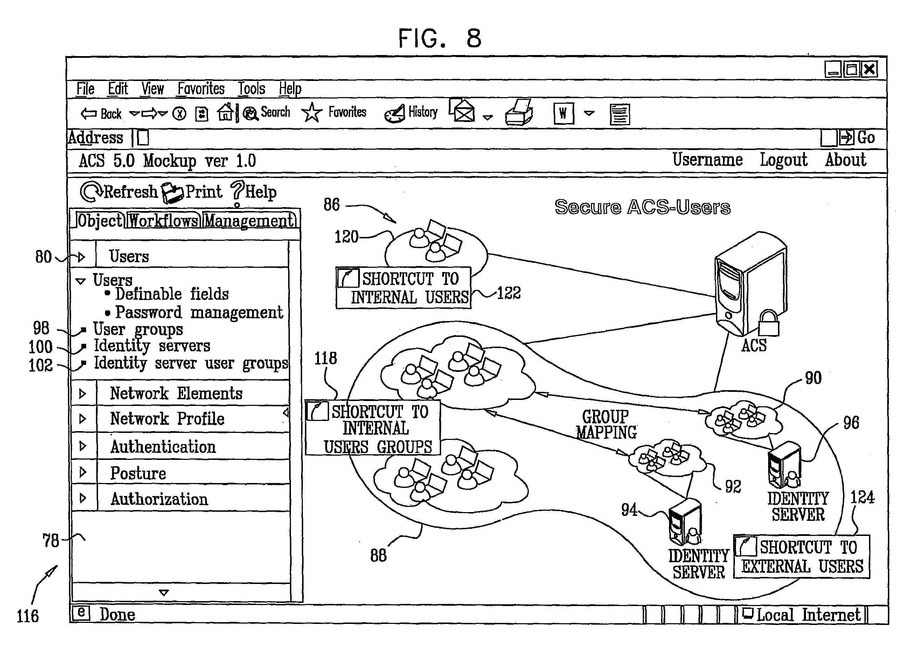

Reference is now made to Fig. 8, which is a screen display 116 similar to the screen display 84 (Fig. 5) in which some of the group icons have been augmented by shortcut icons in accordance with a disclosed embodiment of the invention. The internal users groups icon 88 now includes a shortcut icon 118. An internal users icon 120 includes a shortcut icon 122. A shortcut icon 124 directed to external users is now present. Applying a selection device, for example, to the internal users groups icon 88, has the same effect as described above with reference to Fig. 2. However, applying the selection device to one of the shortcut icons 118, 122, 124 causes the target of the shortcut to be selected. This is the same result as is obtained by selecting a menu item in the navigation panel 78.

It will be appreciated by persons skilled in the art that the present invention is not limited to what has been particularly shown and described hereinabove. Rather, the scope of the present invention includes both combinations and subcombinations of the various features described hereinabove, as well as variations and modifications thereof that are not in the prior art, which would occur to persons skilled in the art upon reading the foregoing description.

## Claims

1. A system for accessing hierarchically arranged information comprising:
a memory; and
a processing unit connectable to a display unit, and to a selection device having a visual indicator (81), said processing unit executing a computer program stored in said memory, wherein responsively to instructions of said computer program, said processing unit is configured to control said display unit to visually present thereon a hierarchical model (70) of said information and a navigation panel (78) having first and second controls (80, 98), said hierarchical model comprising first and second icons (76, 88) arranged in respective first and second hierarchical levels, and respectively mapped to said first and second controls;
wherein the processing unit is configured, responsively to a presence of said visual indicator proximate one of said first icons, to emphasize a corresponding first control of said navigation panel, and
wherein the processing unit is further configured, responsively to a selection of one of said first icons, to replace said first icons with said second icons, and to modify said navigation panel to present said second controls on said display unit.

2. The system according to claim 1, wherein said second controls comprise submenus of said first controls, the processing unit configured, in response to exposure of said second controls on said navigation panel, to replace said first icons with said second icons.

3. The system according to claim 1, wherein the processing unit is configured, responsively to said presence of said visual indicator proximate one of said first icons, to cause said display unit to present a help screen relating to said one first icon.

4. The system according to claim 1, configured to present said first icons in a content area of a screen on said display unit.

5. The system according to claim 1, configured to present said first icons in a popup window on said display unit.

6. The system according to claim 1, wherein said first icons comprise shortcut icons for selection of a data item.

7. A computer program product including a computer-readable medium storing software code adapted, when executed by a computer, to perform a method for accessing hierarchically arranged information comprising the steps of:
visually presenting a hierarchical model (70) of said information comprising first and second icons (76, 88) arranged in respective first and second hierarchical levels, said icons representing data items, and a navigation panel (78) having first and second controls (80, 98) respectively mapped to said first and second icons;
responsively to a presence of a visual indicator (81) proximate one of said first icons, emphasizing a corresponding first control of said navigation panel; and
responsively to a selection of one of said first icons, replacing said first icons by said second icons, and modifying said navigation panel to visually present said second controls.

8. The computer program product according to claim 7, wherein said second controls comprise submenus of said first controls, the software code further arranged to expose said second controls on said navigation panel, and responsively replace said first icons with said second icons.

9. The computer program product according to claim 7, the software code further arranged, responsively to said presence of said visual indicator proximate one of said first icons, to present a help screen relating to said one first icon.

10. The computer program product according to claim 7, wherein the software code is arranged to present said first icons in a content area of a screen display.

11. The computer program product according to claim 7, wherein the software code is arranged to present said first icons visually in a popup window.

12. The computer program product according to claim 7, wherein said first icons comprise shortcut icons for selection of one of said data items.

13. The computer program product according to claim 7, the software code further arranged to gather said information through use of a network management protocol, the software code arranged to remotely query network devices of a computer network and, in turn, receive information from said network devices so as to respectively populate said first and second hierarchical levels with said gathered information.

## Patentansprüche

1. System für den Zugriff auf hierarchisch angeordnete Informationen, das Folgendes umfasst:
einen Speicher und
eine Verarbeitungseinheit, die mit einer Anzeigeeinheit und mit einer Auswahlvorrichtung, die eine visuelle Anzeige (81) aufweist, verbunden werden kann, wobei die genannte Verarbeitungseinheit ein Computerprogramm ausführt, das in dem genannten Speicher gespeichert ist, wobei als Reaktion auf Anweisungen des genannten Computerprogramms die genannte Verarbeitungseinheit dafür konfiguriert ist, die genannte Anzeigeeinheit so zu steuern, dass sie darauf Folgendes visuell anzeigt: ein hierarchisches Modell (70) der genannten Informationen und ein Navigationsfeld (78), das erste und zweite Bedienelemente (80, 98) aufweist, wobei das genannte hierarchische Modell erste und zweite Symbole (76, 88) aufweist, die in einer jeweiligen ersten und zweiten hierarchischen Ebenen angeordnet sind und jeweils dem genannten ersten und zweiten Bedienelement zugeordnet sind;
wobei die Verarbeitungseinheit dafür konfiguriert ist, als Reaktion auf ein Vorhandensein der genannten visuellen Anzeige in der Nähe eines der genannten ersten Symbole ein entsprechendes erstes Bedienelement des genannten Navigationsfelds hervorzuheben und
wobei die Verarbeitungseinheit ferner dafür konfiguriert ist, als Reaktion auf eine Auswahl eines der genannten ersten Symbole die genannten ersten Symbole gegen die genannten zweiten Symbole auszutauschen und das genannte Navigationsfeld zu modifizieren, um die genannten zweiten Bedienelementelemente auf der genannten Anzeigeeinheit anzuzeigen.

2. System nach Anspruch 1, wobei die genannten zweiten Bedienelemente Untermenüs der genannten ersten Bedienelemente umfassen, wobei die Verarbeitungseinheit dafür konfiguriert ist, als Reaktion auf die Anzeige der genannten zweiten Bedienelementelemente auf dem genannten Navigationsfeld die genannten ersten Symbole gegen die genannten zweiten Symbole auszutauschen.

3. System nach Anspruch 1, wobei die Verarbeitungseinheit dafür konfiguriert ist, als Reaktion auf das genannte Vorhandensein der genannten visuellen Anzeige in der Nähe eines der genannten ersten Symbole die genannte Anzeigeeinheit zu veranlassen, einen Hilfe-Bildschirm in Bezug auf das genannte erste Symbol anzuzeigen.

4. System nach Anspruch 1, das dafür konfiguriert ist, die genannten ersten Symbole in einem Inhaltsbereich eines Bildschirms auf der genannten Anzeigeeinheit anzuzeigen.

5. System nach Anspruch 1, das dafür konfiguriert ist, die genannten ersten Symbole in einem Popup-Fenster auf der genannten Anzeigeeinheit anzuzeigen.

6. System nach Anspruch 1, wobei die genannten ersten Symbole Verknüpfungssymbole für die Auswahl eines Datenelements umfassen.

7. Computerprogrammprodukt, das ein computerlesbares Medium umfasst, auf dem Softwarecode gespeichert ist, der dafür ausgelegt ist, wenn er von einem Computer ausgeführt wird, ein Verfahren zum Zugreifen auf hierarchisch angeordnete Informationen auszuführen, das folgende Schritte umfasst:
visuelles Anzeigen eines hierarchischen Modells (70) der genannten Informationen, das Folgendes umfasst: erste und zweite Symbole (76, 88), die in jeweiligen ersten und zweiten hierarchischen Ebenen angeordnet sind, wobei die genannten Symbole Datenelemente darstellen und ein Navigationsfeld (78), das jeweils erste und zweite Bedienelemente (80, 98) aufweist, die den ersten und zweiten Symbolen zugeordnet sind;
als Reaktion auf ein Vorhandensein einer visuellen Anzeige (81) in der Nähe eines der genannten ersten Symbole Hervorheben eines entsprechenden ersten Bedienelements des genannten Navigationsfelds und
als Reaktion auf eine Auswahl eines der genannten ersten Symbole Austauschen der genannten ersten Symbole gegen die genannten zweiten Symbole und Modifizieren des genannten Navigationsfelds, um die genannten zweiten Bedienelemente visuell anzuzeigen.

8. Computerprogrammprodukt nach Anspruch 7, wobei die genannten zweiten Bedienelemente Untermenüs der genannten ersten Bedienelemente umfassen, wobei der Softwarecode ferner für Folgendes ausgelegt ist: Anzeigen der genannten zweiten Bedienelementelemente auf dem genannten Navigationsfeld und als Reaktion darauf, Austauschen der genannten ersten Symbole gegen die genannten zweiten Symbole.

9. Computerprogrammprodukt nach Anspruch 7, wobei der Softwarecode ferner für Folgendes ausgelegt ist: als Reaktion auf das genannte Vorhandensein der genannten visuellen Anzeige in der Nähe eines der genannten ersten Symbole, Anzeigen eines Hilfe-Bildschirms in Bezug auf das genannte erste Symbol.

10. Computerprogrammprodukt nach Anspruch 7, wobei der Softwarecode dafür ausgelegt ist, die genannten ersten Symbole in einem Inhaltsbereich einer Bildschirmanzeige darzustellen.

11. Computerprogrammprodukt nach Anspruch 7, wobei der Softwarecode dafür ausgelegt ist, die genannten ersten Symbole visuell in einem Popup-Fenster anzuzeigen.

12. Computerprogrammprodukt nach Anspruch 7, wobei die genannten ersten Symbole Verknüpfungssymbole zur Auswahl eines der genannten Datenelemente umfassen.

13. Computerprogrammprodukt nach Anspruch 7, wobei der Softwarecode ferner dafür ausgelegt ist, die genannten Informationen mit Hilfe eines Netzwerkverwaltungsprotokolls zu sammeln, wobei der Softwarecode dafür ausgelegt ist, Netzwerkvorrichtungen eines Computernetzwerks entfernt abzufragen und als Reaktion Informationen von den Netzwerkvorrichtungen zu erhalten, um jeweils die genannten ersten und zweiten hierarchischen Ebenen mit den genannten gesammelten Informationen zu füllen.

## Revendications

1. Système pour accéder à des informations hiérarchisées comprenant :
une mémoire ; et
une unité de traitement pouvant être connectée à une unité d'affichage, et à un dispositif de sélection comportant un indicateur visuel (81), ladite unité de traitement exécutant un programme informatique stocké dans ladite mémoire, dans lequel, en réponse à des instructions dudit programme informatique, ladite unité de traitement est configurée pour commander à ladite unité d'affichage de présenter visuellement un modèle hiérarchique (70) desdites informations, et un panneau de navigation (78) comportant des premières et secondes commandes (80,98), ledit modèle hiérarchique comprenant des première et deuxième icônes (76,88) disposées dans des premier et second niveaux hiérarchiques respectifs, et respectivement mappées sur lesdites première et seconde commandes ;
dans lequel l'unité de traitement, en réponse à la présence dudit indicateur visuel à proximité de l'une quelconque desdites premières icônes, est configurée pour mettre en valeur une première commande correspondante dudit panneau de navigation, et
dans lequel l'unité de traitement, en réponse à la sélection de l'une quelconques desdites premières icônes, est configurée en outre pour remplacer lesdites premières icônes par lesdites secondes icônes, et pour modifier ledit panneau de navigation pour que celui-ci présente lesdites secondes commandes sur l'unité d'affichage.

2. Système selon la revendication 1, dans lequel les secondes commandes comprennent des sous-menus desdites premières commandes, l'unité de traitement est configurée, en réponse à la présentation desdites secondes commandes sur ledit panneau de navigation, pour remplacer lesdites premières icônes par lesdites secondes icônes.

3. Système selon la revendication 1, dans lequel l'unité de traitement, en réponse à la présence dudit indicateur visuel à proximité de l'une quelconque desdites premières icônes, est configurée pour commander à ladite unité d'affichage de présenter un écran d'aide se rapportant à ladite première icône.

4. Système selon la revendication 1, configuré pour présenter lesdites premières icônes dans une zone de contenu d'un écran sur ladite unité d'affichage.

5. Système selon la revendication 1, configuré pour présenter lesdites premières icônes dans une fenêtre contextuelle sur ladite unité d'affichage.

6. Système selon la revendication 1, dans lequel lesdites premières icônes comprennent des icônes de raccourci pour sélectionner un élément de données.

7. Programme informatique comprenant un support lisible par ordinateur stockant un code de logiciel adapté, lorsqu'il est exécuté par un ordinateur, pour mettre en oeuvre un procédé pour accéder à des informations hiérarchisées comprenant :
la présentation visuelle d'un modèle hiérarchique (70) desdites informations comprenant des premières et secondes icônes (76,88) disposées dans des premier et second niveaux hiérarchiques respectifs, lesdites icônes représentant des éléments de données, et un panneau de navigation (78) comportant des premières et secondes commandes (80,98), respectivement mappées sur lesdites premières et secondes icônes ;
en réponse à la présence d'un indicateur visuel (81) à proximité de l'une quelconque desdites premières icônes, la mise en valeur d'une première commande correspondante dudit panneau de navigation ; et
en réponse à la sélection de l'une quelconque desdites premières icônes, le remplacement desdites premières icônes par lesdites secondes icônes, et la modification dudit panneau de navigation pour présenter visuellement lesdites secondes commandes.

8. Programme informatique selon la revendication 7, dans lequel lesdites secondes commandes comprennent des sous-menus desdites premières commandes, le code de logiciel étant en outre prévu pour présenter lesdites secondes commandes sur ledit panneau de navigation, et en réponse, remplacer lesdites premières icônes par lesdites secondes icônes.

9. Programme informatique selon la revendication 7, le code de logiciel étant en outre prévu, en réponse à ladite présence dudit indicateur visuel à proximité de l'une quelconque desdites premières icônes, pour présenter un écran d'aide associé à ladite première icône.

10. Programme informatique selon la revendication 7, dans lequel le code de logiciel est prévu pour présenter lesdites premières icônes dans une zone de contenu de l'écran affiché.

11. Programme informatique selon la revendication 7, dans lequel le code de logiciel est prévu pour présenter lesdites premières icônes visuellement dans une fenêtre contextuelle.

12. Programme informatique selon la revendication 7, dans lequel lesdites premières icônes comprennent des icônes de raccourci pour sélectionner l'un quelconque desdits éléments de données.

13. Programme informatique selon la revendication 7, ledit code de logiciel étant prévu en outre pour recueillir lesdites informations via l'utilisation d'un protocole de gestion de réseau, le code de logiciel étant prévu pour interroger à distance les dispositifs de réseau d'un réseau informatique et, à son tour, recevoir lesdites informations provenant desdits dispositifs de réseau de manière à remplir respectivement lesdits premier et second niveaux hiérarchiques avec lesdites informations.
